# EUROPEAN PATENT SPECIFICATION

(11) **EP 1 741 937 B1**
(45) Date of publication and mention of the grant of the patent: **10.09.2008**
(21) Application number: 06013789.0
(22) Date of filing: 04.07.2006
(51) Int. Cl.: F16B 7/14, E04H 4/16, F16B 2/18

(54) **Clamping arrangement for swimming pool accessories**
Klemmvorrichtung für die Ausrüstung eines Schwimmbeckens
Dispositif de serrage pour Accessoires d'une piscine

(30) Priority: 05.07.2005 CA 2511383
(43) Date of publication of application: 10.01.2007
(73) Proprietor: Patron, Christian, Blainville (CA)
(72) Inventor: Patron, Christian, Blainville (CA)
(74) Representative: Wasmeier, Alfons

(56) References cited:
- EP-A- 0 641 578
- EP-A- 0 822 346
- DE-B- 1 227 734
- US-A- 4 591 285
- US-A1- 2004 101 351

## Description

### BACKGROUND OF THE INVENTION

In the swimming pool industry, the joining together of various components for temporary use is widely practiced. Thus, virtually every pool uses a telescoping rod arrangement wherein two cylindrical members are joined together to provide an adjustable length pole. This adjustable length pole is then fitted with various accessories such as a scrubber, a vacuum head, a skimmer net, etc.

With respect to the telescoping pole arrangement, it is known that the same may use a cam lock system wherein a plug is inserted into one end of the inner member. Thus, there is provided an eccentric groove in the projecting portion which receives an eccentric collar. With the collar concentrically positioned in the groove, the telescopic members are free to be adjusted longitudinally with respect to each other. However, when the collar is rotated to an eccentric position relative to the plug-in, the plug-in collars are both forced into frictional engagement with opposite sides of the other member and thereby lock the members in position. This particular type of cam lock can be inconvenient in that it is bidirectional and will lock the telescoping members together when the collar is rotated in either direction relative to the plug.

EP 0 822 346 A1 discloses a stick of variable length and a relative locking device which comprises a hollow cylindrical body for housing a pair of sticks, a longitudinal slit and a clamp operating cam freed from a manoeuvering lever and allows a certain angular play between lever and cam. In the closing position the lever can be raised without any effort. This locking device preferably is to be applied to sport sticks.

EP 0 641 578 A1 refers to an adjustable length ski pole clamp, which is easily adjusted to vary the length and secure and tight, at a desired length.

US 2004/0101351 A1 discloses a telescoping pole lock assembly, where a first elongated pole of a first diameter is arranged to telescopingly receive a first end of a second pole of a smaller diameter. The first pole has a first or uppermost end with a pole lock arrangement mounted thereon.

It is also known,in the art to provide an arrangement for locking of the telescoping members wherein the locking action is achieved only when the members are rotated relative to each other in a single predetermined direction.

As previously mentioned, one of the distal ends of one of the poles is designed to receive and secure an accessory such as a skimmer net or a vacuum head. Conventionally, the arrangement for securing the utensil to the pole comprises an arrangement wherein the pole has at least one pair of diametrically opposed apertures which are designed to receive fingers or prongs extending outwardly from a shaft associated with the utensil. The fingers or prongs are normally resiliently biased outwardly by suitable means.

Although the above arrangements are considered standard in the pool industry, there is a need for other means of locking telescoping rods together as well as for securing the swimming pool utensil to the telescoping rod.

### SUMMARY OF THE INVENTION

It is an object of the present invention to provide a basic securing and clamping arrangement which is suitable for attaching a swimming pool utensil to a rod.

It is a further object of the present invention to provide a securing and clamping arrangement which may be utilized with telescoping poles to secure the poles in a desired longitudinal relationship.

According to one aspect of the present invention there is provided a clamping arrangement for securing a swimming pool implement to a shaft, the arrangement comprising a shaft receiving member having a wall surrounding a receptacle, the receptacle being sized to receive the shaft, a tongue forming a portion of the wall, the tongue having a proximal end connected to the wall and a distal end which is moveable, a clamping member, the clamping member being pivotably connected to the wall proximate the distal end of the tongue, the clamping member being moveable between an open position and a closed position, the closed position being one wherein the clamping member substantially overlies the tongue, a cam portion on the clamping member, the cam portion being located proximate the point where the clamping member is pivotably connected to the wall, the cam portion having a cam surface arranged to contact the distal end of the tongue such that as the clamping member is moved from the open position to the closed position, the cam surface initially forces the distal end of the tongue inwardly.

According to a further aspect of the present invention there is provided a clamping arrangement for securing a telescoping pole arrangement in a desired position, the telescoping pole comprising an inner pole and an outer pole, the clamping arrangement comprising a tongue forming a portion of a wall of the outer pole, the tongue having a proximal end connected to the wall and a distal end which is moveable, a clamping member pivotably connected to the wall proximate the distal end of the tongue, the clamping member being moveable between an open position and a closed position, the closed position being one wherein the clamping member substantially overlies the tongue, a cam portion on the clamping member, the cam portion being located proximate the point where the clamping member is pivotably connected to the wall, the cam portion having a cam surface arranged to contact the distal end of the tongue such that as the clamping is moved from the open position to the closed position, the cam surface initially forces the distal end of the tongue inwardly.

The clamping arrangement of the present invention may be utilized for securing a swimming pool implement to a pole or like member. The clamping arrangement may also be utilized with a telescoping pole or for securing one of the pole sections to the other.

In either of the above arrangements, there is provided a shaft receiving member which has a wall surrounding a receptacle formed therein. The receptacle is sized to receive the shaft.

Formed within the wall of the shaft receiving member is a tongue portion. The tongue portion has a proximal end which is formed integrally with the remainder of the wall and a distal end which is free to move due to the flexible nature of the material and the relative thinness of the tongue.

The clamping member is connected to the wall of the shaft receiving member by suitable means. Conveniently, an axle may extend between two wall portions with the tongue having its proximal end mounted on the axle.

A cam is formed at the proximal end of the clamping member, the cam preferably having a first cam surface portion and a second cam surface portion which are angled with respect to each other as will be described in the preferred embodiments hereinbelow.

Preferably, there is also provided a locking arrangement between the tongue and the clamping member when the clamping member is in a closed position.
The clamping arrangement is preferably formed of a plastic material. In the instance wherein the clamping arrangement is used with a telescoping pole, the clamping arrangement may be secured to one end of the outer pole by any suitable means.

It is conventional in the industry that the shafts of both the telescoping poles and swimming pool implements are circular and in the preferred embodiment, the same arrangement is employed. However, it is within the scope of this invention that other cross sectional configurations may be utilized.

### BRIEF DESCRIPTION OF THE DRAWINGS

Having thus generally described the invention, reference will be made to the accompanying drawings illustrating an embodiment thereof, in which:
Figure 1 is a perspective view of a swimming pool cleaning implement having a clamping arrangement for securing a shaft therein;
Figure 2 is a side elevational view thereof;
Figure 3 is an end view of the shaft receiving receptacle;
Figure 4 is a cross-sectional view taken along the lines 4-4 of Figure 2 when the clamping member is in an open position;
Figure 5 is a view similar to Figure 4 illustrating a partial closing of the clamping member;
Figure 6 is a cross-sectional view similar to Figure 4 illustrating the clamping member in a near closed position; and
Figure 7 is a view similar to Figure 4 illustrating the clamping member in a locked position.

### DETAILED DESCRIPTION OF THE INVENTION

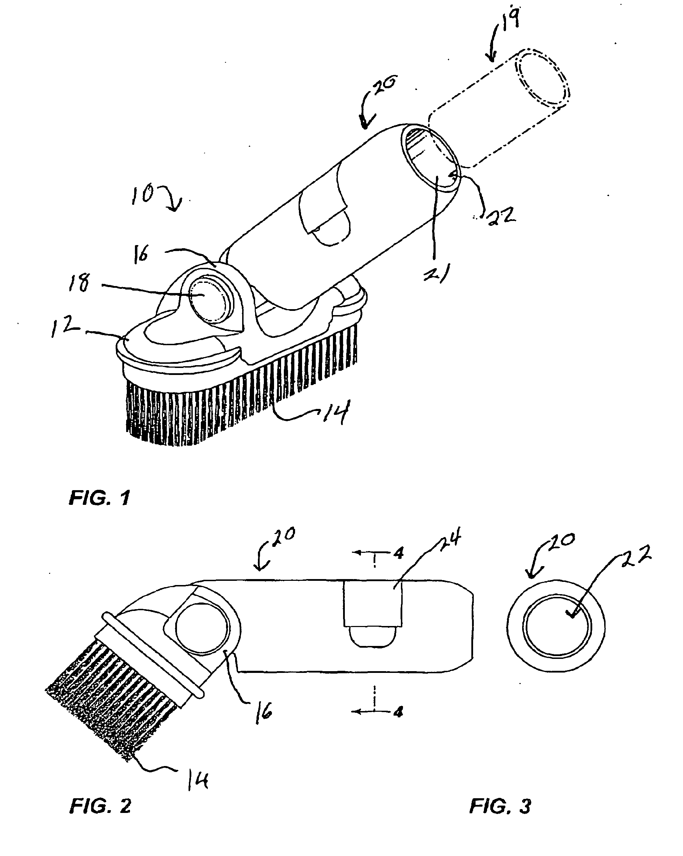

Referring to the drawings in greater detail and by reference characters thereto, there is illustrated in Figure 1 a swimming pool implement in the form of a brush 10 having a body 12 with bristles 14 extending therefrom. A pair of ears 16 (only one shown) are mounted on top of body 12 to receive an axle 18 on which a shaft receiving member 20 is mounted.

Shaft receiving member 20 has a wall 21 which includes a cylindrically shaped receptacle 22 for receiving a free end of a pole 19 illustrated in dotted lines. The clamping arrangement includes a clamping member 24 having a proximal end 26 and a distal end 28.

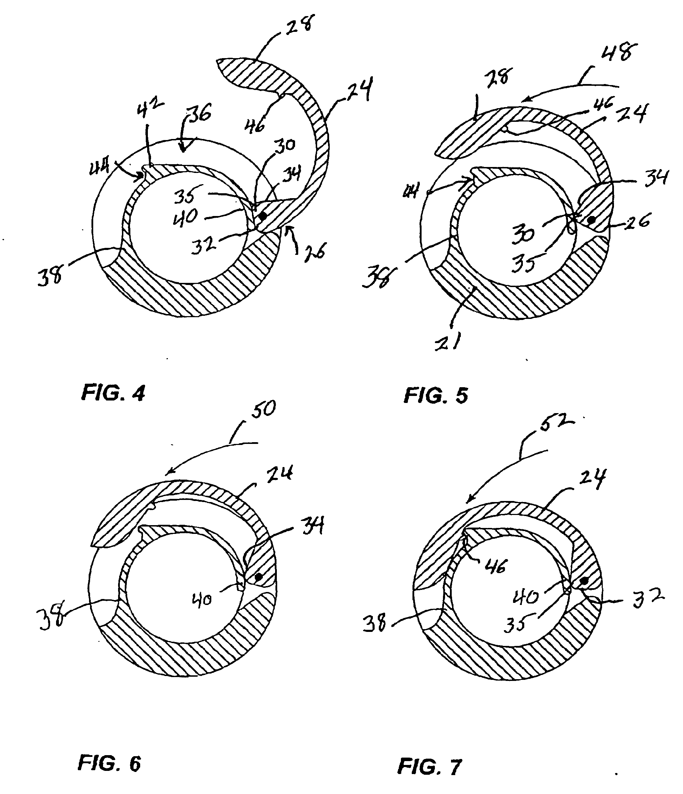

Forming a portion of the shaft receiving member 20 is a tongue 36. Tongue 36 has a tongue proximal end 38 and a tongue distal end 40 which is free to move due to the relative thinness of its design and the flexible nature of the material. As may be seen in Figures 4 to 7, tongue 36 has on an exterior surface thereof an enlarged portion 42 which incorporates a recess 44 for reasons which will become apparent hereinbelow.

Clamping member 24 overlies tongue 24 and has a clamping member proximal end 26 and a clamping member distal end 28. Clamping member 24 is secured to shaft receiving member 20 by means of a shaft or axle 18.

Formed at proximal end 26 of clamping member 24 is a cam generally designated by reference numeral 30 and which has a first cam surface portion 32, a second cam surface portion 34, and with a cam transition surface 35 therebetween. First cam surface portion 32 and second cam surface portion 34 are angled with respect to each other and form an angle of less than 90□ for reasons which will be discussed hereinbelow.

Formed on the inner surface of clamping member 24 is a locking projection 46 which is designed to fit within recess 44 of tongue 36.

Referring to Figures 4 to 7, Figure 4 illustrates the clamping arrangement wherein the clamping member 24 is in its fully opened position. In this position, receptacle 22 is free to receive pole 19 with the inner surface of tongue 36 forming a portion of the wall 21 surrounding receptacle 22.

In the open position of Figure 4, first cam surface portion 32 lies adjacent to the outer surface of tongue distal end 40.

Referring to Figure 5, when clamping member 24 is initially moved towards its closed position as indicated by arrow 48, cam transition portion 35 will cause tongue distal end 40 to move inwardly. As the closing action is continued, as shown in Figure 6 and by arrow 50, cam 30 moves past its maximum camming action position and tongue distal end 40 is free to move slightly outwardly from its maximum inward position. In so doing, tongue 24 will then move on its own accord to a fully closed position as shown in Figure 7. In other words, tongue distal end 40 exerts a force on clamping lever 24 to urge it to the fully closed position indicated by arrow 52.

In the above description, tongue distal end 40 is shown as extending inwardly as there is no pole 19 shown as being inserted in receptacle 22. In practice, there is a slight inward movement along with compression of the tongue distal end 40.

As shown in Figure 7, in the fully closed position, locking projection 47 engages in recess 44 to maintain clamping member 24 in the fully closed position.

It will be understood that while the clamping arrangement is shown between a pole 19 and a swimming pool cleaning implement 10, the same arrangement can be used with telescoping poles as are typically used in a swimming pool. In such an arrangement, the clamping arrangement may be provided as a separate piece similar to shaft receiving member 20 of Figure 1 and which piece forms the end portion of the outer pole. Alternatively, the poles may be formed of a plastic material incorporating the shaft receiving member 20.

It will be understood that the above described arrangement is for purposes of illustration only and that changes and modifications may be made thereto without departing from the spirit and scope of the invention.

## Claims

1. A clamping arrangement with a pole or shaft for securing cleaning implement (10) to the shaft (19) and to be fitted with various accessories, such as a brush, a swimming pool scrubber, a vacuum head, etc. by means of a shaft receiving member (20) having a wall (21) surrounding a receptacle (22), said receiving member (20) being sized to receive said shaft, **characterised by**
a tongue (36) forming a portion of the wall (21), said tongue having a proximal end (38) connected to said wall and a distal end (40) which is moveable;
a clamping member (24) being pivotably connected to said wall (21) proximate said distal end (40) of said tongue (36), said clamping member (24) being moveable between an open position and a closed position, said closed position being one wherein said clamping member (24) substantially overlies said tongue (36);
and a cam portion (30) on said clamping member (24), said cam portion being located proximate the point where said clamping member is pivotably connected to said wall (21), said cam portion having a cam surface (32, 34, 35) arranged to contact said distal end (40) of said tongue (36) such that as said clamping member is moved from said open position to said closed position, said cam surface initially forces said distal end (40) of said tongue (36) inwardly.

2. The clamping arrangement according to claim 1, wherein the clamping arrangement comprises a shaft receiving member (20) having a wall (21) surrounding a receptacle (22), said receptacle being sized to receive said shaft.

3. The clamping arrangement according to claim 1, wherein said shaft is a telescopic pole (19) comprising an inner pole and an outer pole.

4. The clamping arrangement according to claim 1, 2 or 3, wherein said cam surface (32, 34, 35) is such that following said movement of said distal end (40) of said tongue (36) inwardly, said tongue is permitted to move slightly outwardly upon continued movement of said clamping member (24).

5. The clamping arrangement according to claim 4, wherein said tongue (36) and said clamping member (24) interlock (44, 46) when said clamping member is moved to said closed position.

6. The clamping arrangement according to claim 3, wherein said pole (19) and said receptacle (22) are cylindrical in configuration.

7. The clamping arrangement according to claim 3 or 6, wherein said clamping arrangement forms an end portion of said outer pole.

8. The clamping arrangement according to claim 3 or 7, wherein said inner pole and said outer pole and said receptacle (22) are cylindrical in configuration.

## Patentansprüche

1. Klemmvorrichtung mit einem Stab oder Schaft zur Befestigung des Reinigungsgerätes (10) mit dem Schaft (19) und zur Aufnahme unterschiedlicher Zubehörteile, z. B. eine Bürste, einen Schrubber zum Reinigen eines Schwimmbades, einen Vakuumkopf usw., mit Hilfe eines einen Schaft aufnehmenden Bauteils (20), das eine Wand (21) besitzt, die einen Aufnahme (22) umgibt, wobei das Aufnahmebauteil (20) so dimensioniert ist, dass der Schaft aufgenommen werden kann, **gekennzeichnet durch**
a) eine Zunge (36), die einen Teil der Wand (21) bildet und die ein nahes Ende (38) ; das mit der Wand verbunden ist, sowie ein fernes Ende (40), das beweglich ist, aufweist,
b) ein Klemmbauteil (24), das schwenkbar mit der Wand (21) nahe dem fernen Ende (40) der Zunge (36) verbunden ist, wobei das Klemmbauteil (24) zwischen einer offenen Position und einer geschlossenen Position beweglich ist, wobei die geschlossene Position die ist, in der das Klemmbauteil (24) die Zunge (36) im Wesentlichen überdeckt, und
c) ein Nockenteil (30) am Klemmbauteil (24), das in der Nähe der Stelle angeordnet ist, an der das Klemmbauteil schwenkbar mit der Wand (21) verbunden ist, wobei das Nockenteil eine Nockenfläche (32, 34, 35) aufweist, das so angeordnet ist, dass es mit dem fernen Ende (40) der Zunge (36) in Kontakt kommt, derart, dass dann, wenn das Klemmbauteil aus der OffenPosition in die Geschlossen-Position bewegt wird, die Nockenfläche zu Beginn das ferne Ende (40) der Zunge (36) nach innen drückt.

2. Klemmvorrichtung nach Anspruch 1, **dadurch gekennzeichnet, dass** sie ein den Schaft aufnehmendes Bauteil (20) mit einer die Aufnahme (22) umgebenden Wand (21) aufweist, wobei die Aufnahme so dimensioniert ist, dass sie den Schaft aufnimmt.

3. Klemmvorrichtung nach Anspruch 1, **dadurch gekennzeichnet, dass** der Schaft ein teleskopförmiger Stab (19) ist, der aus einem inneren und einem äußeren Stabteil besteht.

4. Klemmvorrichtung nach Anspruch 1, 2 oder 3, **dadurch gekennzeichnet, dass** die Oberfläche (32, 34, 35) so ausgebildet ist, dass im Anschluss an die Bewegung des fernen Endes (40) der Zunge (36) nach innen die Zunge sich geringfügig nach außen bei fortgesetzter Bewegung des Klemmbauteiles (24) bewegen kann.

5. Klemmvorrichtung nach Anspruch 4, **dadurch gekennzeichnet, dass** die Zunge (36) und das Klemmbauteil (24) sich miteinander verriegeln (44, 46), wenn das Klemmbauteil in die Geschlossen-Position bewegt wird.

6. Klemmvorrichtung nach Anspruch 3, **dadurch gekennzeichnet, dass** der Stab (19) und die Aufnahme (22) zylindrische Form haben.

7. Klemmvorrichtung nach Anspruch 3 oder 6, **dadurch gekennzeichnet, dass** sie ein Endteil des äußeren Stabes bildet.

8. Klemmvorrichtung nach Anspruch 3 oder 7, **dadurch gekennzeichnet, dass** der innere und der äußere Stab sowie der Aufnahmebehälter (22) zylindrische Form haben.

## Revendications

1. Aménagement de blocage avec un pôle ou un arbre pour fixer un dispositif de nettoyage (10) à l'arbre (19) et à équiper de divers accessoires, tels qu'une brosse, une brosse de piscine, une tête à vide, etc. à l'aide d'un élément récepteur d'arbre (20) ayant une paroi (21) entourant un réceptacle (22), ledit élément récepteur (20) étant dimensionné pour recevoir ledit arbre, **caractérisé par** :
une languette (36) formant une partie de la paroi (21), ladite languette ayant une extrémité proximale (38) raccordée à ladite paroi et une extrémité distale (40) qui est mobile ;
un élément de blocage (24) étant raccordé à pivotement à ladite paroi (21) à proximité de ladite extrémité distale (40) de ladite languette (36), ledit élément de blocage (24) pouvant se déplacer entre une position ouverte et une position fermée, ladite position fermée étant une position dans laquelle ledit élément de blocage (24) recouvre sensiblement ladite languette (36) ;
et une partie de came (30) sur ledit élément de blocage (24), ladite partie de came étant placée à proximité du point où ledit élément de blocage est raccordé à pivotement à ladite paroi (21), ladite partie de came ayant une surface de came (32, 34, 35) aménagée pour venir en contact avec ladite extrémité distale (40) de ladite languette (36) de sorte que, lorsque l'élément de blocage est déplacé de ladite position ouverte à ladite position fermée, ladite surface de came presse initialement ladite extrémité distale (40) de ladite languette (36) vers l'intérieur.

2. Aménagement de blocage selon la revendication 1, dans lequel l'aménagement de blocage comprend un élément récepteur d'arbre (20) ayant une paroi (21) entourant un réceptacle (22), ledit réceptacle étant dimensionné pour recevoir ledit arbre.

3. Aménagement de blocage selon la revendication 1, dans lequel ledit arbre est un pôle télescopique (19) comprenant un pôle interne et un pôle externe.

4. Aménagement de blocage selon la revendication 1, 2 ou 3, dans lequel ladite surface de came (32, 34, 35) est telle qu'à la suite dudit mouvement de ladite extrémité distale (40) de ladite languette (36) vers l'intérieur, on laisse ladite languette se déplacer légèrement vers l'extérieur lors d'un mouvement continu dudit élément de blocage (24).

5. Aménagement de blocage selon la revendication 4, dans lequel ladite languette (36) et ledit élément de blocage (24) se verrouillent (44, 46) lorsque ledit élément de blocage est déplacé dans ladite position fermée.

6. Aménagement de blocage selon la revendication 3, dans lequel ledit pôle (19) et ledit réceptacle (22) ont une configuration cylindrique.

7. Aménagement de blocage selon la revendication 3 ou 6, dans lequel ledit aménagement de blocage forme une partie d'extrémité dudit pôle externe.

8. Aménagement de blocage selon la revendication 3 ou 7, dans lequel ledit pôle interne, ledit pôle externe et ledit réceptacle (22) ont une configuration cylindrique.
